(19) **Europäisches Patentamt / European Patent Office / Office européen des brevets**

(11) **EP 1 676 118 B1**

(12) **FASCICULE DE BREVET EUROPEEN**

(45) Date de publication et mention
de la délivrance du brevet:
**12.01.2011 Bulletin 2011/02**

(21) Numéro de dépôt: **04791536.8**

(22) Date de dépôt: **14.10.2004**

(51) Int Cl.:
***G01N 11/14*** *(2006.01)*

(86) Numéro de dépôt international:
**PCT/FR2004/002624**

(87) Numéro de publication internationale:
**WO 2005/043131 (12.05.2005 Gazette 2005/19)**

(54) **PROCEDE ET DISPOSITIF DE CARACTERISATION D UN FLUIDE**

VERFAHREN UND VORRICHTUNG ZUR CHARAKTERISIERUNG EINER FLÜSSIGKEIT

METHOD AND DEVICE FOR CHARACTERIZING A FLUID

(84) Etats contractants désignés:
**AT BE BG CH CY CZ DE DK EE ES FI FR GB GR HU IE IT LI LU MC NL PL PT RO SE SI SK TR**

(30) Priorité: **21.10.2003 FR 0312279**

(43) Date de publication de la demande:
**05.07.2006 Bulletin 2006/27**

(73) Titulaire: **CENTRE NATIONAL DE LA RECHERCHE SCIENTIFIQUE (CNRS)**
**75794 Paris Cedex 16 (FR)**

(72) Inventeur: **MANNEVILLE, Sébastien**
**F-33000 Bordeaux (FR)**

(74) Mandataire: **Texier, Christian**
**Cabinet Régimbeau**
**20, rue de Chazelles**
**75847 Paris Cedex 17 (FR)**

(56) Documents cités:
**US-A- 4 441 358      US-A- 4 862 384**
**US-B1- 6 378 357    US-B1- 6 535 796**

Printed by Jouve, 75001 PARIS (FR)

## Description

La présente invention est relative aux procédés et dispositifs de caractérisation d'un fluide soumis à des contraintes.

Plus particulièrement, l'invention concerne un procédé et un dispositif de caractérisation d'un fluide des particules réfléchissant les ultrasons, que ce soit naturellement ou non. Dans ce dernier cas, il peut être fait appel à des agents de contraste acoustique. Dans ce procédé, on soumet à des contraintes, un échantillon du fluide placé entre deux surfaces dans un rhéomètre pour mesurer des caractéristiques rhéologiques de échantillon lors de la mise en mouvement relatif des deux surfaces l'une par rapport à l'autre.

Dans le domaine de la rhéologie classique, on utilise un rhéomètre pour mesurer le comportement de la déformation et de l'écoulement d'un fluide lorsqu'on lui impose une contrainte. Le rhéomètre mesure des caractéristiques rhéologiques globales de l'échantillon -du fluide soumis à une contrainte déterminée par le rhéomètre, les caractéristiques rhéologiques globales correspondant à des données moyennées sur la taille de l'échantillon. Ces caractéristiques rhéologiques globales sont pertinentes pour les fluides qui présentent des déformations homogènes sur tout l'échantillon sous contraintes. Le rhéomètre se révèle donc être un outil performant pour l'étude des fluides dont l'écoulement est dit homogène, c'est-à-dire qui ont un comportement rhéologique identique dans tout l'échantillon.

Par contre, il se révèle être un outil incomplet pour la caractérisation de fluides qui ont un comportement rhéologique plus complexe, fluides présentant sous contraintes des déformations locales inhomogènes, telles que du glissement aux parois, des fractures locales, des bandes de cisaillement.

Or, ces fluides complexes jouent un rôle très important dans de nombreux domaines de l'industrie comme l'alimentation, la chimie et les cosmétiques. Leur étude présente donc un grand intérêt industriel.

Il a été proposé dans le document US 6 535 796 un appareil automatisé pour la mesure de l'évolution d'un fluide sous l'effet d'un écoulement avec cisaillement, ledit fluide étant logé dans une cellule de cisaillement ayant une partie mobile destinée à créer l'écoulement, l'appareil comprenant: un moyen de mesure destiné à coopérer avec ladite cellule de cisaillement pour mesurer un paramètre physique du fluide dans ladite cellule, un moyen d'entraînement destiné à coopérer avec ladite partie mobile de la cellule de cisaillement pour établir un taux de cisaillement contrôlé, ou pour établir un taux de contrainte de cisaillement donné, un moyen de commande dudit moyen d'entraînement permettant d'établir un taux déterminé de cisaillement au fluide, ou un taux de contrainte de cisaillement de fluide, un moyen de lecture et d'enregistrement de données de mesure issues du moyen de mesure, et un moyen de mise en correspondance desdites données de mesure avec ledit taux de cisaillement ou de contrainte de cisaillement en fonction d'un programme de mesures déterminé, les moyens de commande, de lecture et d'enregistrement et de mise en correspondance étant pilotés par ladite unité programmable.

Par ailleurs, le document US 6 378 357 décrit un procédé pour mesurer des propriétés rhéologiques d'un fluide contenant des particules réfléchissant des ondes acoustiques, comprenant les étapes consistant à transmettre un signal acoustique au fluide, recevoir des ondes acoustiques réfléchies par les particules réfléchissantes, déterminer un décalage en fréquence des ondes réfléchies dans un ensemble de fenêtres temporelles correspondant à des régions d'échantillonnage du fluide et traiter les données pour déterminer des propriétés rhéologiques du fluide.

La présente invention a pour objectif notamment de pallier cet inconvénient de la rhéologie classique.

A cet effet, selon l'invention, un procédé du genre en question est essentiellement **caractérisé en ce que** l'on collecte en outre des données locales ultrasonores de déformation de l'échantillon par des moyens de mesure par ondes ultrasonores.

Grâce à cette disposition, le mouvement de l'échantillon du fluide peut être mesuré localement.

Cette invention, alliant mesures rhéologiques globales et locales, permet d'obtenir une description complète, à la fois spatiale et temporelle, d'un fluide sous contraintes.

Cette méthode non intrusive permet une étude rhéologique locale des fluides diffusant les ondes ultrasonores, ce qui comprend les fluides diffusant naturellement les ondes ultrasonores et les fluides ne diffusant pas naturellement les ondes ultrasonores mais ! auxquels on ajoute des agents de contraste acoustique, cet ajout ne perturbant pas l'étude. Ce procédé de rhéologie locale permet de s'affranchir de certaines contraintes liées aux méthodes optiques, déjà existantes, et décrites dans les documents « G. G. Fuller, J. M. Rallison, R. L. Schmidt, L. G. Leal, J. Fluid Mech., 100 :555, 1980 » et « B. J. Ackerson, N. A. Clark, J. Physique, 42 :929, 1981 » qui ne peuvent pas être appliquées à des échantillons opaques ou diffusant très fortement la lumière. Grâce à ce procédé, la gamme des fluides étudiés en rhéologie locale est étendue.

Dans des modes de réalisation préférés du procédé selon l'invention, on peut éventuellement avoir recours en outre à l'une et/ou à l'autre des dispositions suivantes :

- on collecte les données locales ultrasonores de déformation de l'échantillon en le sondant avec des ondes ultrasonores de fréquence centrale supérieure à 20 MHz ; plus les ondes ultrasonores sont de fréquences élevées, plus grande est la résolution spatiale des données locales ultrasonores de déformation ;

- le fonctionnement du rhéomètre fournit une référence temporelle pour la collecte des données locales ultrasonores relatives au déplacement de l'échantillon soumis aux contraintes induites par le rhéomètre, ce qui permet la corrélation temporelle de données rhéologiques globales, moyennées sur la taille de l'échantillon et de données locales ultrasonores relatives au déplacement de l'échantillon soumis aux contraintes induites par le rhéomètre ;

- les données locales ultrasonores de déformation correspondent au déplacement d'une multitude de points selon un axe (Z), cette multitude de points formant un champ d'observation sensiblement continu, et le procédé comprend une étape d'observation au cours de laquelle :

  • on émet dans l'échantillon successivement plusieurs impulsions ultrasonores, avec une fréquence de répétition de ces impulsions comprise entre 0 et 20 kHz,
  • on détecte des échos correspondant à chaque impulsion ultrasonore réfléchis par les particules réfléchissantes de l'échantillon, et
  • on calcule localement des déplacements dans l'échantillon entre deux impulsions pour des points du champ d'observation, en utilisant une technique de corrélation croisée des données locales ultrasonores ;

- une étape de calibration précède l'étape d'observation de déplacement de l'échantillon du fluide au moyen d'ondes ultrasonores, étape de calibration que l'on réalise selon un axe Z de tir et avec un échantillon de fluide (fluide simple newtonien) dont on connaît les données locales ultrasonores de déformation, et au cours de laquelle on calcule des facteurs de correction de mesures en ajustant les données locales théoriques de déformation connues de l'échantillon aux mesures des données locales de déformation collectées au moyen des ondes ultrasonores, ces facteurs de correction étant dus aux problèmes de réfraction aux surfaces de l'échantillon ; l'axe Z est déterminé expérimentalement en fonction de l'indice de réflexion de l'échantillon de manière à réduire la réflexion des ondes ultrasonores sur les parois du rhéomètre et optimiser un signal correspondant aux données collectées ;

- ladite étape d'observation réalisée sur l'échantillon sous contraintes est suivie d'une étape de visualisation d'image au cours de laquelle toutes les positions d'une multitude de points sur l'axe Z sont observées en fonction du temps, via l'amplitude de pression, sur une sonde de pression, des échos correspondant à chaque impulsion ultrasonore réfléchie par les particules réfléchissantes de l'échantillon, cette amplitude pouvant être codée chromatiquement ;

- l'étape d'observation est suivie d'une étape de calcul de vitesse à partir des déplacements des points du champ d'observation à un instant donné, selon l'axe Z, puis on réitère cette étape de calcul plusieurs fois, et après avoir moyenné toutes les vitesses obtenues à chacun des points du champ d'observation, on détermine un profil de vitesse selon l'axe Z ;

- on détermine plusieurs profils de vitesse selon l'axe Z successivement à une fréquence comprise entre 0,1 Hz et 1 kHz ; étant donné qu'un profil de vitesse peut être ainsi réalisé en 1 ms à 10 secondes selon les conditions expérimentales et la précision souhaitée, la variation des profils de vitesse sur l'axe Z peut donc être étudiée avec une grande résolution temporelle ; une telle résolution temporelle permet de suivre la dynamique des fluides complexes sur des échelles de temps nettement plus courtes que d'autres techniques de mesure locale comme la diffusion de la lumière ou l'imagerie par résonance magnétique qui nécessitent des temps d'acquisition de l'ordre de la minute :

- le champ d'observation s'étend au moins selon un plan comprenant un premier axe Z et un deuxième axe Y formant un angle quelconque avec ledit premier axe ;

- au cours de l'étape d'observation, on utilise une barrette de plusieurs transducteurs ultrasonores (T1,..., Tn) disposés selon au moins l'axe Z pour émettre les impulsions ultrasonores, et détecter les échos correspondant à chaque impulsion ultrasonore réfléchie par les particules réfléchissantes de l'échantillon (8), afin de fournir une image des déplacements des points du champ d'observation à un instant t donné.

Par ailleurs, l'invention a également pour objet un dispositif, composé d'un rhéomètre pour appliquer, entre deux surfaces en mouvement relatif l'une par rapport à l'autre, des contraintes à un échantillon de fluide compris entre ces deux surfaces et pour mesurer des caractéristiques rhéologiques moyennées sur la taille de l'échantillon, **caractérisé en ce qu**'il comporte en outre un dispositif ultrasonore pour mesurer des déformations locales par des moyens de mesure par ondes ultrasonores, ce dispositif ultrasonore comprenant :

- un générateur d'ondes ultrasonores pour émettre dans l'échantillon de telles ondes, selon une séquence de plusieurs tirs, et

- un récepteur d'ondes ultrasonores pour détecter les échos réfléchis par les particules réfléchissantes du fluide correspondant à chaque tir d'onde ultrasonore, ces échos étant utilisés pour suivre localement la déformation du fluide en fonction du temps.

Dans des modes de réalisation préférés du dispositif selon l'invention, on peut éventuellement avoir recours en outre aux dispositions suivantes :

- le générateur d'ondes ultrasonores du dispositif ultrasonore est **caractérisé en ce qu**'il émet des ondes ultrasonores de fréquence supérieure à 20 MHz, et

- le rhéomètre comporte une cellule de Couette dont l'épaisseur est inférieure à 4 mm.

D'autres caractéristiques et avantages de l'invention apparaîtront au cours de la description suivante de plusieurs de ses formes de réalisation, données à titre d'exemples non limitatifs, en regard des dessins joints.

Sur les dessins :

- la figure 1 est une vue schématique d'un dispositif de caractérisation d'un fluide selon une forme de réalisation de l'invention,
- la figure 2 est une vue schématique de dessus d'un arrangement relatif d'un dispositif ultrasonore et d'un rhéomètre à cellule de Couette selon la forme de réalisation de l'invention de la figure 1, dans laquelle l'épaisseur de la paroi extérieure de la cellule de Couette du rhéomètre traversée par les ondes ultrasonores est localement réduite,
- la figure 3 est un signal des échos détectés dans une suspension diluée de billes de polystyrène, par le récepteur d'un dispositif ultrasonore selon la forme de réalisation de l'invention de la figure 1,

- la figure 4 est une partie agrandi du signal représenté en figure 3, formé de deux signaux d'échos correspondant à deux impulsions successives séparées de 1 ms,
- la figure 5 représente une fonction de corrélation des deux signaux de la figure 4,
- la figure 6 représente des profils de vitesse mesurés, dans un fluide homogène correspondant à une suspension newtonienne de billes de polystyrène, selon la présente invention,
- la figure 7 représente 150 signaux d'échos successifs détectés lors de la mise en mouvement d'un organogel selon le procédé de l'invention,
- la figure 8 représente des signaux d'échos ultrasonores dans une émulsion concentrée soumise à une contrainte périodique oscillant à 1 Hz,
- la figure 9 représente des signaux d'échos ultrasonores dans une émulsion diluée soumise à une contrainte périodique oscillant à 1 Hz,
- la figure 10 représente des profils de vitesse mesurés dans un fluide inhomogène, présentant des bandes de cisaillement, selon la présente invention,
- la figure 11a représente le taux de cisaillement global enregistré par le rhéomètre au cours du temps,

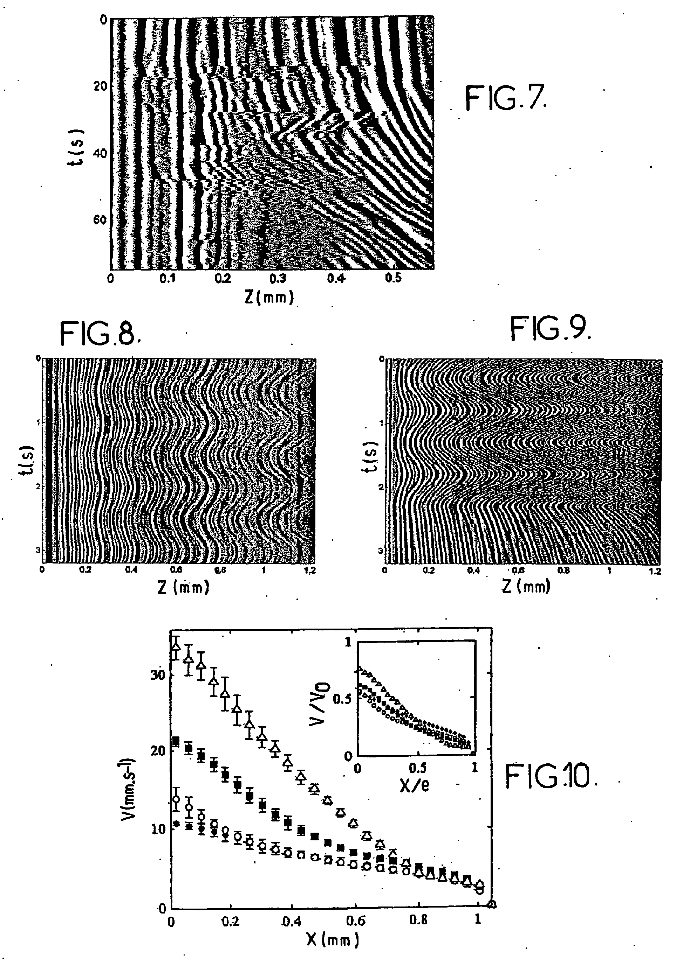

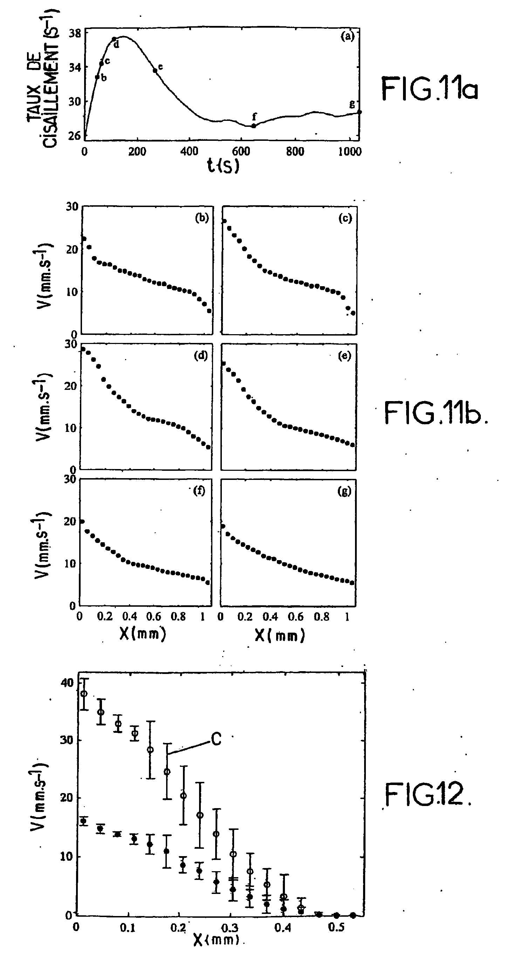

- la figure 10b représente six profils de vitesse successifs enregistrés pendant un régime transitoire de contrainte représenté en figure 11a,
- la figure 12 montre des profils de vitesse mesurés selon la présente invention dans un organogel.

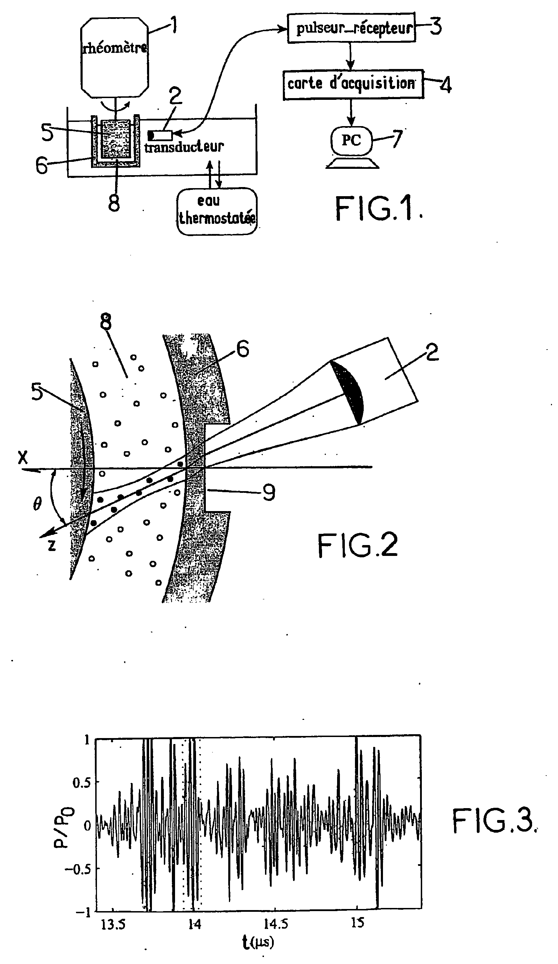

Le dispositif schématisé sur la figure 1 comporte un rhéomètre 1, un transducteur 2, un pulseur-récepteur 3 et une carte d'acquisition 4 reliée à un micro- ordinateur 7. Le rhéomètre 1 est un appareil commercialisé par la société TA Instruments sous la référence AR 1000. Il comporte une cellule de Couette, composée de deux cylindres concentriques 5 et 6 de Plexiglas dont la hauteur est de 30 mm et entre lesquels se trouve un échantillon 8 de fluide. Selon l'échantillon étudié, l'intervalle entre les deux cylindres 5 et 6 est compris entre 0,5 mm et 1,1 mm. Le cylindre intérieur 5 forme un rotor dont la rotation est contrôlée par le rhéomètre. Il mesure en temps réel la déformation, la contrainte et le taux de cisaillement appliqués au fluide et permet d'enregistrer les caractéristiques rhéologiques globales de l'échantillon au cours du temps : module de cisaillement et de perte dans le régime des petites déformations, viscosité du fluide dans le régime des grandes déformations. Il est important de noter que la présente invention peut être adaptée à d'autres géométries de rhéomètre, telles que cone-plan ou plan-plan.

Le transducteur 2 est un transducteur piezo-polymère large bande commercialisé par la société Panametrics sous la référence PI 50-2. Il est placé face au cylindre extérieur 6 fixe (stator) à l'extérieur de la cellule de Couette comme indiqué sur la figure 2. Il travaille à la fois en émission et en réception. L'ensemble composé du transducteur 2 et de la cellule de Couette 5, 6 est placé dans une cuve rectangulaire (20 cm de long et 12 cm de largue) fixée sur la base du rhéomètre 1 et dans laquelle circule de l'eau distillée dont la température est contrôlée à +/-0,1°C.

La figure 2 montre un arrangement relatif du transducteur 2 et de la cellule de Couette, vu de dessus. Le faisceau ultrasonore est focalisé dans l'échantillon 8 de fluide sensiblement au milieu de la distance séparant les cylindres 5 et 6. L'axe du faisceau est repéré par la direction Z, qui présente un angle θ d'incidence par rapport à la direction radiale X du rotor 5 et du stator 6.

Afin de minimiser l'épaisseur de la surface de la cellule de Couette traversée par les ondes ultrasonores, une fenêtre rectangulaire 9 est réalisée dans le stator 6. L'atténuation introduite par la traversée du stator est de ce fait réduite.

Des impulsions ultrasonores haute fréquence sont émises par le transducteur 2 grâce au pulseur à large bande 3.

Dans une forme de réalisation de la présente invention, la fréquence de ces ondes ultrasonores est centrée autour de 36 MHz et leur émission correspond à un tir d'une durée typique de 0.1 microseconde. La résolution spatiale obtenue est de l'ordre de 40 micromètres. La résolution spatiale de ce procédé peut être augmentée en utilisant des ondes ultrasonores de plus haute fréquence à condition que l'absorption ultrasonore, qui augmente avec la fréquence, ne réduise pas trop le rapport signal sur bruit de l'expérience.

Ces ondes ultrasonores se propagent dans l'eau de la cuve thermostatée, à travers le stator 6 avant de pénétrer l'échantillon 8.

Après l'émission ou tir d'une impulsion, le pulseur 3 reçoit puis filtre et amplifie les échos diffusés par l'échantillon et captés par le transducteur 2. Le signal de sortie du pulseur 3 est alors envoyé sur la carte d'acquisition 4 installée dans le micro-ordinateur 7 qui stocke les données sur un disque dur.

La figure 3 montre un exemple de signal enregistré dans une suspension diluée de billes de polystyrène dont le diamètre est compris entre 3 et 10 micromètres. Elle représente un ensemble complexe d'échos ultrasonores résultant des interférences des ondes diffusés par le milieu.

En régime de diffusion simple, quand les diffuseurs sont petits devant la longueur d'onde des ultrasons et le libre parcours moyen des ondes ultrasonores grand devant la taille de l'échantillon, le temps d'arrivée t d'un écho correspond à la position z, repérée sur l'axe Z du faisceau des diffuseurs donnant naissance à cet écho, par la seule relation :

$$z= c_0 * t/2,$$

où $c_0$ est la vitesse de propagation des ultrasons dans l'échantillon et le facteur ½ traduit l'aller et retour entre le transducteur et le diffuseur. Cette relation entre le temps d'arrivée t des échos et la position des diffuseurs est à la base de toute mesure échographique et donc à la base de la présente invention.

A présent, le dispositif et le principe de base de cette invention sont exposés dans une des formes possibles de réalisation.

Les sections suivantes s'attacheront à décrire plus en détails le traitement des données collectées, puis les résultats déjà obtenus par application d'une forme possible du procédé et du dispositif selon la présente invention.

Conformément au procédé selon l'invention, on soumet l'échantillon 8 à des contraintes grâce au rhéomètre 1 et on collecte des données locales ultrasonores de déformation de l'échantillon 8 grâce à l'ensemble constitué du transducteur 2, du pulseur-récepteur 3 et de la carte d'acquisition 4 reliée au micro-ordinateur 7.

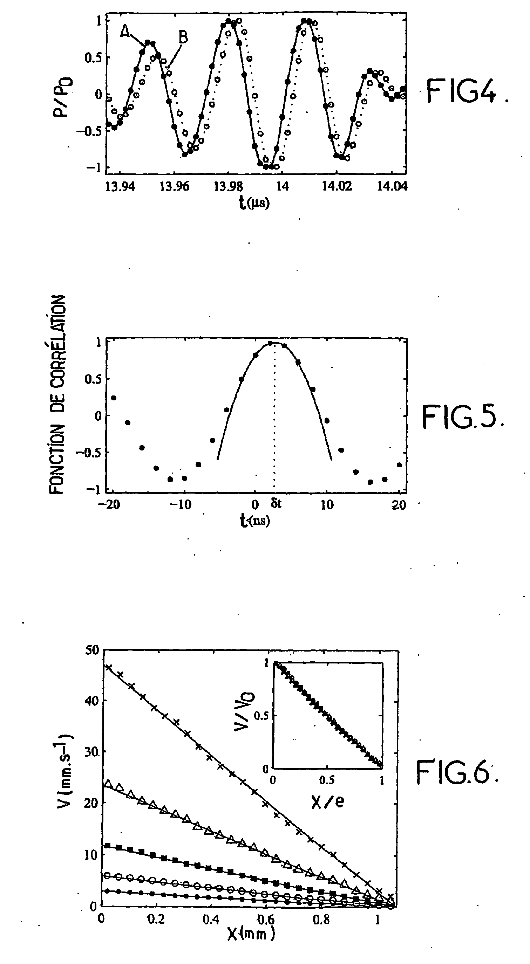

Ainsi, on émet des impulsions ultrasonores et on en détecte les échos. La figure 4 est un agrandissement d'une partie de la figure 3. Les signaux A et B de la figure 4 représentent deux échos correspondant respectivement à deux impulsions ultrasonores successives séparées de 1 ms et détectées au moyen du transducteur 2. L'épaisseur de l'échantillon étant inférieure à 4 mm, cela permet de supposer que le mouvement des diffuseurs est gelé durant la propagation des ondes ultrasonores. En effet, la propagation des ultrasons à travers 1 mm d'échantillon dure environ 2 microsecondes, intervalle de temps suffisamment court pendant lequel on peut considérer que les positions relatives des diffuseurs sont inchangées.

La Figure 4 montre que pour une fréquence de répétition des impulsions sensiblement égale à 1 kHz, on peut facilement mesurer le décalage temporel dt, entre deux impulsions successives représentées respectivement par le signal A et le signal B, sur une partie de ces signaux.

Mathématiquement, le traitement de données consiste à découper deux signaux d'échos successifs en petites fenêtres correspondant chacune à une position z différente le long de l'axe du faisceau ultrasonore. La Figure 4 montre l'une de ces petites fenêtres, dont la position est repérée par un rectangle en pointillés sur le signal complet de la Figure 3. Pour chaque fenêtre, les deux morceaux de signaux successifs sont intercorrélés et l'on estime le décalage temporel dt entre ces deux signaux en calculant la position du maximum de la fonction de corrélation après une interpolation parabolique au voisinage de ce maximum comme le montre la figure 5. Des exemples de tels calculs de corrélation sont donnés dans l'état de la technique, notamment par O'Donnell et al. (« Internal displacement and strain imaging using speckle tracking », IEEE transactions on ultrasonic, ferroelectrics, and frequency control, vol. 41, n°3, mai 1994, p. 314-325).

Pour une fenêtre située autour de t, on en déduit alors le déplacement dz= $c_0$*dt/2 d'un point de l'échantillon à la position z= $c_0$*t/2 correspondante. On récupère ainsi une mesure locale du déplacement dz dans l'échantillon en fonction de z entre les deux impulsions.

De manière complémentaire aux opérations décrites ci-dessus, on procède à une étape de calcul de vitesse à partir des mesures locales des déplacements des points du champ d'observation à un instant donné, selon l'axe Z. On réitère cette étape de calcul plusieurs fois, et après avoir moyenné toutes les vitesses obtenues à chacun des points du champ d'observation, on détermine un profil de vitesse selon l'axe Z.

La vitesse en un point donnée est calculée en trois étapes.

La première étape correspond au calcul du déplacement des points du champ d'observation comme exposé précédemment et grâce auquel on obtient dz.

La deuxième étape consiste à diviser dz par le temps séparant deux impulsions successives, T, soit : $v_z$(z) =dz/T. La fréquence de répétition des impulsions ultrasonores correspond à 1/T. Enfin, si on suppose que le champ de vitesse est purement orthoradial, il est aisé de passer de la vitesse $v_z$ (z) projetée selon l'axe Z à la vitesse orthoradiale v (x) connaissant l'angle θ entre l'axe des ultrasons Z et la direction X.

En théorie, deux impulsions successives suffisent à déterminer le déplacement de l'échantillon en fonction de z. En pratique, le signal d'échos ultrasonore n'est jamais parfaitement homogène dans tout l'échantillon et il est nécessaire de moyenner les résultats obtenus sur 20 à 1000 tirs d'ondes ultrasonores pour obtenir une mesure de vitesse fiable pour une position donnée.

Ainsi avec une fréquence de tirs de l'ordre du kHz, on obtient un profil de vitesse en 0.02 à 2 secondes, alors que l'obtention de profils de vitesse par un procédé et un dispositif optiques tels que mentionnés ci-dessus est de l'ordre de la minute. Plus généralement, selon les conditions expérimentales et la précision souhaitée, un profil de vitesse peut être obtenu en 1 milliseconde à 10 secondes.

Afin de calibrer le dispositif, une étape de calibration est réalisée avec un échantillon de fluide homogène.

La figure 6 montre des profils de vitesse d'un fluide homogène, enregistrés pour différents taux de cisaillement imposés par le rhéomètre 1. Les profils de vitesse décroissent linéairement depuis le rotor 5 (en x=0) jusqu'au stator 6 (en x=1.1 mm) où la vitesse est nulle, car le fluide étudié est homogène (fluide newtonien). Ces mesures permettent de calibrer le dispositif en corrélation avec les paramètres géométriques liés à l'arrangement relatif du faisceau ultrasonore et de la cellule de Couette : position du transducteur 2 par rapport au rotor 5 et au stator 6, angle θ d'incidence des ultrasons.

Cette calibration permet de détecter :

- l'angle θ correspondant à l'angle d'incidence des ultrasons,
- un facteur de correction angulaire, et
- un facteur de correction des distances.

Après calibration, la collecte des données locales ultrasonores de déformation est réalisée pour un échantillon quelconque.

La collecte de données locales ultrasonores de déformation de cet échantillon sous contraintes est suivie d'une étape de visualisation d'image au cours de laquelle les positions d'une multitude de points sur l'axe Z sont observées en fonction du temps, l'amplitude de la pression détecté par le transducteur 2 pour les échos correspondant à chaque impulsion ultrasonore réfléchie par les particules réfléchissantes de l'échantillon pouvant être codée chromatiquement, comme le montre la figure 7.

En effet, la figure 7 présente 150 signaux d'échos successifs enregistrés lors de la mise en mouvement d'un organogel à base de toluène dans un rhéomètre dont l'épaisseur entre les deux cylindres 5 et 6 est de 0,5 mm. L'amplitude des signaux des échos, codée en gris, est représentée en fonction de la profondeur de pénétration des ultrasons dans l'échantillon 8. Les lignes noires correspondent à la position des particules réfléchissantes constituant l'organogel. Dans ce cas les particules assurant la cohésion du gel ont la forme de bâtonnets d'environ 10 micromètres de diamètre pour 100 micromètres de long et diffusent suffisamment les ultrasons naturellement. L'axe des abscisses z correspond à l'axe Z de propagation des ultrasons. L'axe des ordonnées t indique l'instant auquel a eu lieu l'impulsion ultrasonore. On peut facilement lire que le mouvement démarre à t=15 s. Les échos fixes au voisinage du stator, surface fixe du rhéomètre, indiquent la présence d'une zone gelée alors que des phénomènes patio-temporels complexes (réseau de fractures instationaires) semblent se produire dans le reste de la cellule pour t>15 s.

La figure 8 et la figure 9 présentent des signaux des échos ultrasonores enregistrés lors de la mise en mouvement d'émulsions dans un rhéomètre 1, dans lequel l'épaisseur entre les deux cylindres 5 et 6 est de 1.1 mm. L'axe des abscisses Z correspond à l'axe de propagation des ondes ultrasonores. L'axe des ordonnées indique l'instant auquel ont eu lieu les impulsions ultrasonores. Dans le cas des émulsions, la présence de petites gouttes d'huile aux propriétés acoustiques différentes du fluide environnant conduit aussi à un signal d'écho ultrasonore.

La figure 8 montre les résultats obtenus pour une émulsion concentrée, pour laquelle le mouvement du signal d'écho est périodique, comme pour un solide élastique, quelle que soit la profondeur z.

La figure 9 montre les résultats obtenus pour une émulsion diluée, qui continue à s'écouler après l'arrêt des oscillations (pour t > 2 s).

L'acquisition et la visualisation dans le temps des signaux d'échos successifs permettent de visualiser les phénomènes rhéologiques se produisant dans l'échantillon confiné dans une épaisseur sensiblement égale à 1 millimètre.

De manière complémentaire aux images obtenues comme indiquées ci-dessus, il est possible grâce aux dispositif et procédé selon l'invention, de déterminer des profils de vitesse de la manière déjà exposée ci-dessus. Ainsi la figure 10 présente des profils de vitesse obtenues avec le dispositif et le procédé selon l'invention dans un fluide complexe : une phase lamellaire lyotrope (mélange d'eau salée à 20 g/L, d'octanol à 78% en masse et de SDS (surfactant) à 6,5% en masse) où l'on a ajouté 1 % en masse de billes de polystyrène. Ce type d'expérience permet d'étudier en particulier le phénomène de glissement aux parois. Le glissement aux parois est un problème récurrent en rhéologie et pour l'industrie. L'écoulement est inhomogène avec une région fortement cisaillée près du rotor qui envahit progressivement toute la cellule lorsqu'on augmente la vitesse $v_0$ du rotor. L'insert de la figure 10 montre les données normalisées par la vitesse du rotor $v_0$ et l'épaisseur e de la cellule. Dans la gamme de température et de cisaillement étudiée, les profils de vitesse v présentent un glissement important aux parois (de l'ordre de 20 à 30 % de la vitesse $v_0$ du rotor). La présente invention permet donc une mesure directe du glissement dans les fluides complexes.

Les figures 11a et 11b illustrent la capacité du dispositif décrit ci-dessus, à mesurer simultanément et selon une même référence temporelle des grandeurs rhéologiques et des profils de vitesse, car le fonctionnement du rhéomètre fournit une référence temporelle pour la collecte des données locales ultrasonores relatives au déplacement de l'échantillon soumis aux contraintes induites par le rhéomètre.

La figure 11b présente six profils de vitesse successifs enregistrés pendant un régime transitoire où la contrainte appliquée à l'échantillon est subitement augmentée et dont la signature rhéologique est présentée en figure 11a : vitesse $v_0$ du rotor mesurée au cours du temps par le rhéomètre. Le dispositif et le procédé de la présente invention permettent de mettre en évidence l'existence d'un écoulement inhomogène avec trois zones de cisaillements différents et des effets de glissement fortement instationnaires au cours du régime transitoire. Les différentes bandes de cisaillements coexistent puis disparaissent au cours du régime transitoire.

De telles mesures locales sont impossibles avec un rhéomètre classique.

Pour ces mesures, chaque profil de vitesse est obtenu en 1,6 s. Plus généralement, selon les conditions expérimentales et la précision souhaitée, un profil de vitesse peut être obtenu en 1 milliseconde à 10 secondes. La présente invention permet donc une étude de caractérisation de fluide dynamique avec une grande résolution temporelle.

La figure 12 présente des mesures réalisées sur l'organogel à base de toluène déjà décrit pour la figure 7. Les profils de vitesse dans une cellule de Couette dont l'épaisseur entre les cylindres 5 et 6 est de 0,5 mm montrent la coexistence d'une zone qui ne coule pas près du stator 6 et d'une zone cisaillée dans le reste de la cellule.

Les barres d'erreur C montrent la dispersion des données liée à la présence de fractures et phénomènes fortement instationnaires au milieu du gel.

## Revendications

1. Procédé de caractérisation d'un fluide contenant des particules réfléchissant les ultrasons dans lequel on soumet à des contraintes un échantillon du fluide placé entre deux surfaces (5,6) dans un rhéomètre (1) pour mesurer des caractéristiques rhéologiques de l'échantillon (8) lors de la mise en mouvement relatif des deux surfaces (5,6) l'une par rapport à l'autre, **caractérisé en ce que** l'on collecte en outre des données locales ultrasonores de déformations de l'échantillon (8) par des moyens de mesure par ondes ultrasonores (2,3,4).

2. Procédé selon la revendication 1, dans lequel on collecte les données locales ultrasonores de déformation de l'échantillon (8) en le sondant avec des ondes ultrasonores de fréquence supérieure à 20 MHz.

3. Procédé selon l'une des revendications précédentes, dans lequel le fonctionnement du rhéomètre (1) fournit une référence temporelle pour la collecte des données locales ultrasonores relatives au déplacement de échantillon (8) soumis aux contraintes induites par le rhéomètre (1).

4. Procédé selon l'une des revendications précédentes, dans lequel les données locales ultrasonores de déformation correspondent au déplacement d'une multitude de points selon un axe Z, cette multitude de points formant un champ d'observation sensiblement continu, ce procédé comprenant une étape d'observation au cours de laquelle :

   - on émet dans l'échantillon (8) successivement plusieurs impulsions ultrasonores, avec une fréquence de répétition de ces impulsions comprise entre 0 et 20 kHz,
   - on détecte des échos correspondant à chaque impulsion ultrasonore réfléchie par les particules réfléchissantes de l'échantillon (8), et
   - on calcule localement des déplacements dans l'échantillon (8) entre deux impulsions pour des points du champ d'observation, en utilisant une technique de corrélation croisée des données locales ultrasonores.

5. Procédé selon la revendication 4, dans lequel une étape de calibration précède l'étape d'observation de déplacement de l'échantillon du fluide au moyen d'ondes ultrasonores, étape de calibration que l'on réalise avec un échantillon de fluide dont on connaît les données locales théoriques de déformation et selon un axe Z de tir fixé arbitrairement, et au cours de laquelle on calcule des facteurs de correction de mesures en ajustant les données locales théoriques de déformation connues de l'échantillon aux mesures des données locales de déformation collectées au moyen des ondes ultrasonores.

6. Procédé selon la revendication 4 ou 5, dans lequel ladite étape d'observation est suivie d'une étape de visualisation d'image au cours de laquelle toutes les positions d'une multitude de points sur l'axe Z sont observées en fonction du temps, via l'amplitude de pression sur une sonde de pression (2) des échos correspondant à chaque impulsion ultrasonore réfléchie par les particules réfléchissantes de l'échantillon, cette amplitude pouvant être codée chromatiquement.

7. Procédé selon la revendication 4, 5 ou 6, dans lequel ladite étape d'observation est suivie d'une étape de calcul de vitesse à partir desdits déplacements des points du champ d'observation à un instant donné, selon l'axe Z, puis on réitère ce calcul plusieurs fois, et après avoir moyenné toutes les vitesses obtenues à chacun des points du champ d'observation, on détermine un profil de vitesse selon l'axe Z.

8. Procédé selon la revendication 7, dans lequel on détermine plusieurs profils de vitesse selon l'axe Z successivement et à une fréquence comprise entre 0,1 Hz et 1 kHz.

**9.** Procédé selon la revendication 4, 5, 6, 7 ou 8, dans lequel le champ d'observation s'étend au moins selon un plan comprenant un premier axe Z et un deuxième axe Y formant un angle quelconque avec ledit premier axe.

**10.** Procédé selon la revendication 4, 5, 6, 7, 8 ou 9, dans lequel au cours de ladite étape d'observation, on utilise une barrette de plusieurs transducteurs ultrasonores (T1,..., Tn) disposés selon au moins l'axe Z pour émettre les impulsions ultrasonores, et détecter les échos correspondant à chaque impulsion ultrasonore réfléchie par les particules réfléchissantes de l'échantillon (8), afin de fournir une image des déplacements des points du champ d'observation à un instant t donné.

**11.** Dispositif de caractérisation d'un fluide, composé d'un rhéomètre (1) pour appliquer entre deux surfaces (5,6) en mouvement relatif l'une par rapport à l'autre des contraintes à un échantillon (8) du fluide compris entre ces deux surfaces (5,6) et pour mesurer des caractéristiques rhéologiques moyennées sur la taille de l'échantillon (8), **caractérisé en ce qu'**il comporte en outre un dispositif ultrasonore (2,3,4) pour mesurer des déformations locales par des moyens de mesure par ondes ultrasonores, ce dispositif ultrasonore comprenant :

> - un générateur d'ondes ultrasonores (2,3) pour émettre dans l'échantillon de telles ondes, selon une séquence de plusieurs tirs, et
> - un récepteur d'ondes ultrasonores (3) pour détecter les échos réfléchis par les particules réfléchissantes du fluide correspondant à chaque tir d'onde ultrasonore, ces échos étant utilisés pour suivre localement la déformation du fluide en fonction du temps.

**12.** Dispositif selon la revendication 11, dans lequel le générateur d'ondes ultrasonores (3) du dispositif ultrasonore émet des ondes ultrasonores de fréquence centrale supérieure à 20 MHz.

**13.** Dispositif selon l'une des revendications 11 ou 12, dans lequel ledit rhéomètre comprend une cellule de Couette d'épaisseur inférieure à 4 mm.

**14.** Dispositif selon l'une des revendications 11, 12 ou 13, dans lequel le dispositif ultrasonore inclue une barrette de plusieurs transducteurs ultrasonores (T1,..., Tn) disposés selon au moins l'axe Z pour émettre les impulsions ultrasonores, et détecter les échos correspondant à chaque impulsion ultrasonore réfléchie par les particules réfléchissantes de l'échantillon (8); afin de fournir une image des déplacements des points du champ d'observation à un instant t donné.

**Claims**

**1.** Method for characterising a fluid containing ultrasound-reflecting particles, in which stresses are applied to a sample of the fluid placed between two surfaces (5, 6) in a rheometer (1) in order to measure rheological characteristics of the sample (8) when the two surfaces (5, 6) are set in relative movement one with respect to the other, **characterised in that** local ultrasonic deformation data of the sample (8) are additionally collected by ultrasonic wave measurement means (2, 3, 4).

**2.** Method according to claim 1, in which the local ultrasonic deformation data of the sample (8) are collected by probing said sample with ultrasonic waves having a frequency greater than 20 MHz.

**3.** Method according to one of the preceding claims, in which the operation of the rheometer (1) supplies a temporal reference for the collection of the local ultrasonic data relating to the displacement of the sample (8) subjected to the stresses induced by the rheometer (1).

**4.** Method according to one of the preceding claims, in which the local ultrasonic deformation data correspond to the displacement of a multitude of points along an axis Z, this multitude of points forming a substantially continuous field of observation, this method comprising an observation step during which:

> a plurality of ultrasonic pulses are successively emitted into the sample (8) with a repetition frequency of these pulses of between 0 and 20 kHz,
> - echoes corresponding to each ultrasonic pulse reflected by the reflecting particles of the sample (8) are detected, and
> - displacements in the sample (8) between two pulses for points in the field of observation are calculated locally using a technique of cross-correlation of the local ultrasonic data.

**5.** Method according to claim 4, in which a calibration step precedes the step of observing the displacement of the sample of the fluid by means of ultrasonic waves, which calibration step is carried out with a sample of fluid for which the theoretical local deformation data are known and along an arbitrarily fixed firing axis Z, and during which measurement correction factors are calculated by adjusting the known theoretical local deformation data of the sample to the measurements of the local deformation data collected by means of the ultrasonic waves.

6. Method according to claim 4 or 5, in which said observation step is followed by an image display step during which all the positions of a multitude of points on the axis Z are observed as a function of time, via the pressure amplitude on a pressure probe (2) of the echoes corresponding to each ultrasonic pulse reflected by the reflecting particles of the sample, it being possible for this amplitude to be chromatically coded.

7. Method according to claim 4, 5 or 6, in which said observation step is followed by a step of calculating the speed based on said displacements of the points in the field of observation at a given instant, along the axis Z, then this calculation is repeated several times and, after having averaged all the speeds obtained at each of the points in the field of observation, a speed profile along the axis Z is determined.

8. Method according to claim 7, in which a plurality of speed profiles along the axis Z are determined successively and at a frequency of between 0.1 Hz and 1 kHz.

9. Method according to claim 4, 5, 6, 7 or 8, in which the field of observation extends at least along a plane comprising a first axis Z and a second axis Y that forms any angle with said first axis.

10. Method according to claim 4, 5, 6, 7, 8 or 9, in which, during said observation step, an array of a plurality of ultrasonic transducers (T1, ..., Tn) arranged along at least the axis Z is used to emit the ultrasonic pulses and to detect the echoes corresponding to each ultrasonic pulse reflected by the reflecting particles of the sample (8), so as to supply an image of the displacements of the points in the field of observation at a given instant t.

11. Device for characterising a fluid, composed of a rheometer (1) for applying, between two surfaces (5, 6) in relative movement one with respect to the other, stresses to a sample (8) of the fluid located between these two surfaces (5, 6) and for measuring rheological characteristics averaged over the size of the sample (8), **characterised in that** it additionally comprises an ultrasonic device (2, 3, 4) for measuring local deformations by ultrasonic wave measurement means, this ultrasonic device comprising:

    - an ultrasonic wave generator (2, 3) for emitting such waves into the sample, in a sequence of several firings, and
    - an ultrasonic wave receiver (3) for detecting the echoes reflected by the reflecting particles of the fluid corresponding to each ultrasonic wave firing, these echoes being used to monitor locally the deformation of the fluid as a function of time.

12. Device according to claim 11, in which the ultrasonic wave generator (3) of the ultrasonic device emits ultrasonic waves having a central frequency greater than 20 MHz.

13. Device according to one of claims 11 or 12, in which said rheometer comprises a Couette cell having a thickness of less than 4 mm.

14. Device according to one of claims 11, 12 or 13, in which the ultrasonic device includes an array of a plurality of ultrasonic transducers (T1, ..., Tn) arranged along at least the axis Z in order to emit the ultrasonic pulses and to detect the echoes corresponding to each ultrasonic pulse reflected by the reflecting particles of the sample (8), so as to supply an image of the displacements of the points in the field of observation at a given instant t.

**Patentansprüche**

1. Verfahren zur Charakterisierung eines Fluids, das Partikel enthält, die Ultraschall reflektieren, bei dem eine Probe des Fluids, die zwischen zwei Flächen (5,6) platziert ist, Spannungen in einem Rheometer (1) unterworfen wird, um rheologische Merkmale der Probe (8) bei dem relativen In-Bewegung-Setzen der beiden Flächen (5,6) eine in Bezug zur anderen zu messen, **dadurch gekennzeichnet, dass** außerdem lokale Ultraschalldaten über Deformationen der Probe (8) von Uftraschallwellen-Messmitteln (2, 3, 4) gesammelt werden.

2. Verfahren gemäß Anspruch 1, bei dem lokale Ultraschalldaten über die Deformation der Probe (8) gesammelt werden, indem sie mit Ultraschallwellen mit einer Frequenz größer als 20 MHz untersucht werden.

3. Verfahren gemäß einem der vorhergehenden Ansprüche, bei dem der Betrieb des Rheometers (1) eine zeitliche Referenz liefert zum Sammeln der lokalen Ultraschalldaten relativ zur Bewegung der Probe (8), die den vom Rheometer (1) verursachten Spannungen unterworfen ist.

4. Verfahren gemäß einem der vorhergehenden Ansprüche, bei dem die lokalen Ultraschalldaten über die Deformation der Bewegung einer Vielzahl von Punkten entlang einer Achse Z entsprechen, wobei diese Vielzahl von Punkten ein im Wesentliches kontinuierliches Beobachtungsfeld bilden, wobei dieses Verfahren einen Beobachtungsschritt umfasst, während dem:

- in der Probe (8) nacheinander mehrere Ultraschallimpulse emittiert werden, mit einer Wiederholungsfrequenz dieser Impulse zwischen 0 und 20 kHz,
- Echos detektiert werden, die jeweils einem Ultraschallimpuls entsprechen, der von den reflektierenden Partikeln der Probe (8) reflektiert wird, und
- lokal Bewegungen in der Probe (8) zwischen zwei Impulsen für Punkte des Beobachtungsfelds berechnet werden, indem eine Kreuzkorrelationstechnik der lokalen Ultraschalldaten verwendet wird.

5. Verfahren gemäß dem Anspruch 4, bei dem ein Kalibrierungsschritt dem Schritt der Beobachtung der Bewegung der Probe des Fluids mittels Ultraschallwellen vorausgeht, wobei der Kalibrierungsschritt mit einer Fluidprobe verwirklicht wird, von der man die lokalen theoretischen Deformationsdaten kennt und entlang einer willkürlich festgelegten Schussachse Z, und während der Messkorrekturfaktoren berechnet werden, indem die bekannten lokalen theoretischen Deformationsdaten an die Messungen der lokalen, mittels der Ultraschallwellen gesammelten Deformationsdaten angepasst werden.

6. Verfahren gemäß dem Anspruch 4 oder 5, bei dem dem Beobachtungsschritt ein Bildvisualisierungsschritt folgt, während dem alle Positionen einer Vielzahl von Punkten auf der Achse Z in Abhängigkeit der Zeit über die Druckamplitude auf einer Drucksonde (2) der Echos beobachtet werden, die jeweils einem Ultraschallimpuls entsprechen, der von den reflektierenden Partikeln der Probe reflektiert wird, wobei diese Amplitude farblich codiert sein kann.

7. Verfahren gemäß dem Anspruch 4, 5 oder 6, bei dem dem Beobachtungsschritt ein Schritt der Geschwindigkeitsberechnung aus Bewegungen der Punkte des Beobachtungsfelds zu einem gegebenen Zeitpunkt entlang der Achse Z folgt, diese Berechnung dann mehrmals wiederholt wird, und nachdem alle zu jedem der Punkte des Beobachtungsfeldes erhaltenen Geschwindigkeiten gemittelt wurden, ein Geschwindigkeitsprofil entlang der Achse Z bestimmt wird.

8. Verfahren gemäß dem Anspruch 7, bei dem mehrere Geschwindigkeitsprofile entlang der Achse Z nacheinander und bei einer Frequenz zwischen 0,1 Hz und 1 kHz bestimmt werden.

9. Verfahren gemäß dem Anspruch 4, 5, 6, 7 oder 8, bei dem das Beobachtungsfeld sich wenigstens entlang einer Ebene erstreckt, die eine erste Achse Z und eine zweite Achse Y umfasst, die einen beliebigen Winkel mit der ersten Achse bildet.

10. Verfahren gemäß dem Anspruch 4, 5, 6, 7, 8 oder 9, bei dem während des Beobachtungsschritts eine Verbindungsschiene mit mehreren Ultraschallwandlern (T1,...,Tn) verwendet wird, die entlang wenigstens der Achse Z angeordnet sind, um die Ultraschallimpulse zu emittieren und die Echos zu detektieren, die jeweils einem Ultraschallimpuls entsprechen, der von den reflektierenden Partikeln der Probe (8) reflektiert wird, um ein Bild der Bewegungen der Punkte des Beobachtungsfeldes zu einem gegebenen Zeitpunkt t zu liefern.

11. Vorrichtung zur Charakterisierung eines Fluids, umfassend ein Rheometer (1), um zwischen zwei Flächen (5, 6) in zueinander relativer Bewegung Spannungen auf eine Probe (8) des Fluids anzuwenden, die zwischen diesen beiden Flächen (5,6) enthalten ist und um rheologische Merkmale zu messen, die über die Größe der Probe (8) gemittelt sind, **dadurch gekennzeichnet, dass** sie außerdem eine Ultraschallvorrichtung (2, 3, 4) umfasst, um lokale Deformationen durch Ultraschallwellen-Messmittel zu messen, wobei diese Ultraschallvorrichtung umfasst:

- einen Ultraschallwellengenerator (2, 3), um in der Probe derartige Wellen zu emittieren, gemäß einer Sequenz mehrerer Schüsse, und
- einen Ultraschallwellenempfänger (3), um die von den reflektierenden Partikel des Fluids reflektierten Echos zu detektieren, die jeweils einem Ultraschallwellenschuss entsprechen, wobei diese Echos verwendet werden, um lokal die Deformation des Fluids in Abhängigkeit der Zeit zu verfolgen.

12. Vorrichtung gemäß Anspruch 11, bei der der Ultraschallwellengenerator (3) der Ultraschallvorrichtung Ultraschallwellen mit zentraler Frequenz größer als 20 MHz emittiert.

13. Vorrichtung gemäß einem der Ansprüche 11 oder 12, bei der das Rheometer eine Couettezelle mit einer Dicke kleiner als 4 mm umfasst.

14. Vorrichtung gemäß einem der Ansprüche 11, 12 oder 13, bei der die Ultraschallvorrichtung eine Verbindungsschiene für mehrere Ultraschallwandler (T1, ..., Tn) umfasst, die entlang wenigstens der Achse Z angeordnet sind, um die Ultraschallimpulse zu emittieren und die Echos zu detektieren, die jeweils einem Ultraschallimpuls entsprechen, der von den reflektierenden Partikeln der Probe (8) reflektiert wird, um ein Bild der Bewegungen der Punkte des

**EP 1 676 118 B1**

Beobachtungsfeldes zu einem gegebenen Zeitpunkt t bereitzustellen.

FIG.1.

FIG.2

FIG.3.

FIG4.

FIG.5.

FIG.6.

FIG.7.

FIG.8.

FIG.9.

FIG.10.

FIG.11a

FIG.11b.

FIG.12.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6535796 B
- US 6378357 B

**Littérature non-brevet citée dans la description**

- **G. G. Fuller ; J. M. Rallison ; R. L. Schmidt ; L. G. Leal.** *J. Fluid Mech.,* 1980, vol. 100, 555
- **B. J. Ackerson ; N. A. Clark.** *J. Physique,* 1981, vol. 42, 929
- **O'Donnell et al.** Internal displacement and strain imaging using speckle tracking. *IEEE transactions on ultrasonic, ferroelectrics, and frequency control,* Mai 1994, vol. 41 (3), 314-325